# EUROPEAN PATENT SPECIFICATION

(11) **EP 2 342 476 B1**
(45) Date of publication and mention of the grant of the patent: **03.09.2014**
(21) Application number: 09736618.1
(22) Date of filing: 22.09.2009
(51) Int. Cl.: F16F 15/31

(54) **FLYWHEEL**
SCHWUNGRAD
VOLANT

(30) Priority: 23.09.2008 GB 0817411
(43) Date of publication of application: 13.07.2011
(73) Proprietor: Heptron Limited, Liverpool, Merseyside L33 7UY (GB)
(72) Inventor: MURPHY, Gary, Liverpool, Merseyside L33 7UY (GB)
(74) Representative: Harrison, Michael Robert
(86) International application number: PCT/GB2009/002266
(87) International publication number: WO 2010/034985

(56) References cited:
- EP-A1- 1 873 891
- BE-A6- 1 009 768
- JP-A- 11 113 212
- JP-A- 57 183 578
- US-A- 3 360 924

## Description

The present invention relates to a flywheel, more specifically, a liquid filled flywheel in which a central processing unit monitors and controls the speed and mass of the flywheel using transducers and valves. The flywheel of the present invention is particular suited to the field of energy storage, more specifically to the area of energy storage within electrical generating and distribution networks.

Document EP 1 873 891 A1 discloses a flywheel according to preamble of claim 1.

One of the major problems facing modem electrical generating and distribution equipment today is the inability of the equipment to be able to store large amounts of generated energy.

The term 'renewable energy sources' is often used to describe sources of energy that occur naturally in nature and do not for example require the burning of fossil fuels.

Flywheels presently exist as means for storing kinetic energy. However, the ability to store large amounts of kinetic energy requires extensive and expensive health and safety equipment. As a result, the cost of supplying the required safety equipment to flywheels for the storage of kinetic energy imposes severe limitations on the size of flywheel that may be utilised for the storage of kinetic energy with the result that the use of large solid flywheels is too costly and impractical.

For example, if a flywheel with a large mass were utilised such that in operation the flywheel revolved at a set speed, if damage either accidental or deliberate were to occur to the supporting structure holding the flywheel, such as the bearings or any other part supporting the flywheel, then the large amount of kinetic energy stored within the flywheel could cause considerable damage to property or even human life if the flywheel were to become detached from the support.

There therefore exists the need for a means of providing a suitable device, namely a flywheel, of suitable size and dimensions to be able to store sufficient kinetic energy to assist in meeting the energy demands of electricity distribution network. Moreover, there exists a need for a flywheel of a suitable size which can assist in meeting the demands of electricity distribution networks which is easy to use and safe to operate with a failsafe mechanism in the event of structural or mechanical failure of the flywheel. It is an object of the present invention to provide such a flywheel.

It is also an object of the present invention to provide energy storage means at times when the output from electrical generation is surplus to requirements and to make this energy available to be fed back into the electricity distribution system when required.

It is also an object of the present invention to provide safety equipment suitable for use with the flywheel of the present invention allowing for instant release of the liquid from the flywheel in the event of structural or operating failure thereby instantly reducing the mass of the flywheel and thereby reducing the risk of injury to property and or life.

In accordance with the present invention there is provided a flywheel suitable for use with liquid wherein the flywheel comprises:a receptacle for receiving the liquid; and wherein the receptacle comprises an outer wall and an inner wall, the inner and outer wall forming a cavity for holding the liquid when the flywheel is in use wherein the outer wall of the cavity is pivotally connected to the flywheel.

The cavity advantageously further comprises sealing means for allowing the passage of fluid into the cavity when the flywheel is in operation and the free draining of the fluid from the cavity and flywheel when the flywheel arrives at a predetermined rotational speed. The sealing means may comprise a one-way valve.

The receptacle is preferably substantially circular.

The cavity advantageously comprises one or more baffles. Each baffle advantageously comprises one or more orifice.

The outer wall of the cavity is pivotally connected to the flywheel. The pivotal connection is preferably a hinge. The outer wall is securably connected to the flywheel such that it is releasable therefrom. The securable connection may comprise a release hatch.

The outer wall may additionally or alternatively comprise one or more release panels.

The liquid may enter the flywheel by means of inlets disposed on the drive shaft. The inlets are advantageously disposed to introduce fluid into the top or bottom of the flywheel.

The flywheel may further comprise a reservoir for holding the said fluid for use with the flywheel.

The flywheel may be connected to at least one of a turbine, motor and generator. The flywheel may be powered by at least one of steam, wind and water.

The flywheel may comprise at least one of a solenoid and valve. The flywheel may comprise one or more transducers and may comprise one or more strain gauges.

The flywheel advantageously comprises a central processing unit (CPU). The CPU may receive signals from at least one of the transducers and strain gauges. The CPU advantageously controls the rate the fluid is introduced into the receptacle relative to at least one of the energy being output from the flywheel, the mass and the speed of rotation of the flywheel.

The flywheel may be connected to a main drive shaft which is preferably held in place by bearings.

The flywheel is advantageously hollow and advantageously comprised of lightweight material.

The flywheel advantageously comprises supporting means.

The flywheel may be used in a fresh or marine environment for the storage of and transfer of energy from a wave source into electricity.

Also according to the present invention (not claimed) there is provided a method of storing energy comprising providing a flywheel having a receptacle for receiving and holding a fluid, providing means for introducing a said fluid into the receptacle, providing means for monitoring the rotational speed of the flywheel in use, driving the flywheel, monitoring the rotational speed of the flywheel and introducing the said fluid into the receptacle at a predetermined rotational speed of the flywheel.

As the fluid is fed into the flywheel, centrifugal forces cause the fluid to move to the outer walls of the flywheel. As more fluid is fed into the flywheel the amount of fluid collecting at the outer walls of the flywheel increases.

There also exists a means of securing the fluid at the outer edges of the flywheel such that the fluid is only released from the walls and allowed to flow back into a storage tank when it is determined that the speed of the flywheel is below a predetermined speed.

The predetermined speed is calculated to be sufficiently low such that almost all of the kinetic energy stored within the flywheel is transferred to an electrical generator and thereby transferred to an available electrical supply network for use by the consumer during use.

One of the main advantages associated with the flywheel of the present invention is that as the structure of the flywheel is hollow, the flywheel may be comprised of light-weight composite materials.

Also, in the event of structural defects being found to be associated with the flywheel, the liquid contained within the flywheel may be released with only a short distance to travel before the fluid is retained by a tank, bund or other means of containing the liquid, thereby dispersing the majority of the kinetic energy into a harmless form.

The present invention will now be described, by way of example, with reference to the accompany drawings, in which:
Figure 1 illustrates a first embodiment of a flywheel according to a first aspect of the present invention connected to a turbine.
Figure 2 illustrates a first embodiment of a flywheel according to a first aspect of the present invention connected to a motor.
Figure 3 illustrates a first embodiment of a flywheel according to a first aspect of the present invention connected to a generator.
Figure 4 illustrates the return flow path of a liquid to a holding reservoir from within the first embodiment of the flywheel according to a first aspect of the present invention.
Figure 5 illustrates the flow of liquid entering the first embodiment of the flywheel according to a first aspect of the present invention from a holding reservoir.
Figure 6 illustrates the flow of liquid entering a second embodiment of a flywheel according to a second embodiment of the present invention from a holding reservoir.
Figure 7 illustrates the return flow path of liquid to a holding reservoir from a flywheel according to a second embodiment of the first aspect of the present invention.
Figure 8 illustrates the communication between the component parts of the flywheel according to the first aspect of the present invention.
Figure 9 illustrates the possible configurations of the component parts of the flywheel according to the first aspect of the present invention and the direction of power transfer.
Figure 10 illustrates the arrangement of baffles within a flywheel according to a first aspect of the present invention.
Figure 11 illustrates the entry of liquid into a third embodiment of a flywheel according to a first aspect of the present invention.
Figure 12 illustrates an expanded view of the liquid opening of the flywheel in an embodiment of a flywheel according to a first aspect of the present invention.
Figure 13 illustrates the use of a flywheel according to the first aspect of the present invention in a marine environment.
Figure 14 illustrates a flow path diagram for the operation of a flywheel according to the present invention.

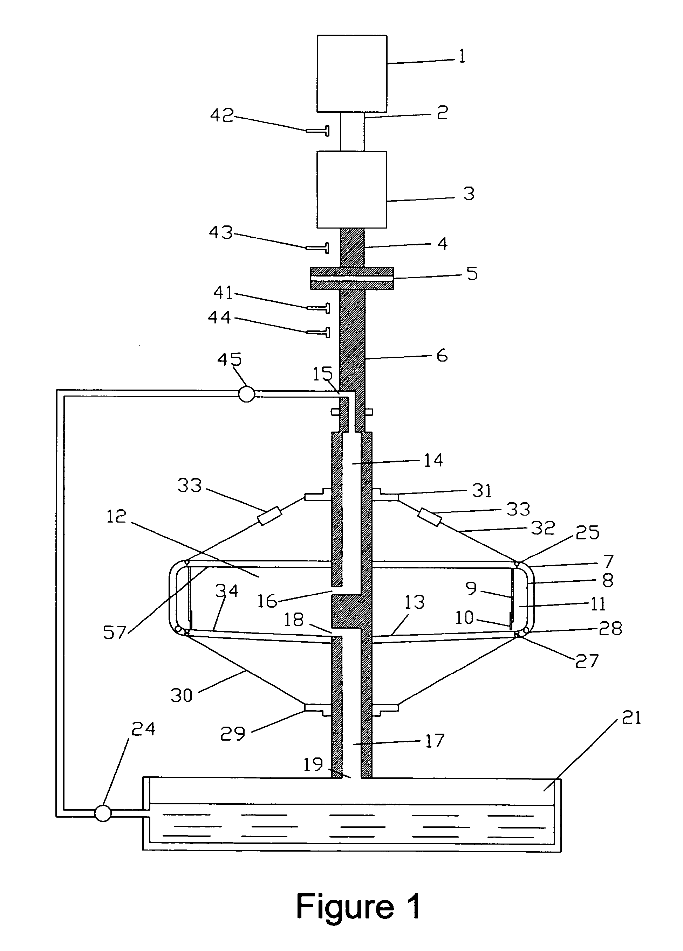

Referring to Figure 1, a first embodiment of a flywheel, according to the present invention, is a connected and supplies power to a turbine 1.

The power to the turbine 1 may be for example in the form of wind, hydro, steam, or the shaft of the turbine may be turned using power from another source.

Fitted to the flywheel are different types of electromagnetic devices, which may include, for example, valves or solenoids. Also fitted to the flywheel are one or more transducers.

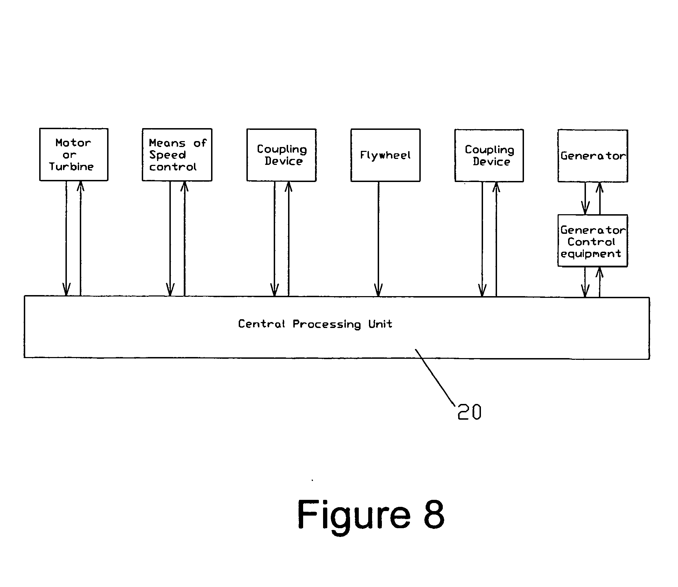

Referring also to Figure 8, a central processing unit (CPU) is provided to control the operation of the electromagnetic devices and the other electrical components.

The input signals to the CPU from the transducers are used by a computer program within the CPU to determine the correct time to provide output signals to operate the electromagnetic devices and other electrical components.

The flywheel is attached to a main drive shaft and the shaft is held in position by several bearings which may comprise for example, ball bearings, magnetic bearings, hydraulic bearings and pneumatic bearings.

Power from turbine 1, may be transferred into speed control means 3 by way of a connecting drive shaft 2. The power may be transferred away from the speed control means 3 via a drive shaft 4. Drive shaft 4 may be connected to a coupling device 5. The coupling device 5 is connected to the flywheel drive shaft 6 which is in turn connected to the main flywheel 7.

The speed control means 3 may comprise for example a semi automatic mechanical gearbox or an alternative speed control means with the ability to change the ratio of the input shaft speed to the output shaft speed depending upon signals which it receives from the central processing unit 20.

That is to say, the speed control means 3 has the ability to increase or decrease the speed of the output shaft 4 in relation to the turbine drive shaft 2, depending upon the signals the speed control means 3 receives from the CPU 20 (shown in Figure 8). The central processing unit 20 may send a signal to the speed control means 3, to increase or decrease the speed of the output shaft 4, depending upon any number of signals it receives from various transducers within the equipment. The decision to increase or decrease the speed of the output shaft 4 is determined by a computer program within the CPU 20.

The coupling device 5 comprises, for example, an electromagnetic clutch or an alternative attachment means with the ability to disengage the speed control means 3 and output shaft 4 from the flywheel drive shaft 6, when required to do so by the CPU 20. The purpose of the coupling device is to reduce frictional losses within the flywheel system when no power is being supplied to the turbine.

When external power is being supplied to the turbine 1, the CPU 20 calculates the correct time to send an electrical signal to the coupling device 5. This enables the speed control means 3 and output shaft 4 to engage with the flywheel drive shaft 6. Consequently, power supplied to the turbine 1 may be transferred through the flywheel system to the flywheel 7, thereby causing the drive shaft 6 and the flywheel 7 to rotate.

A transducer 44 is fitted to the drive shaft 6. Signals from the transducer 44 are fed back to the CPU 20. Upon receipt of the transducer signals, the CPU 20 evaluates the speed of rotation of the drive shaft 6 and hence the speed of rotation of the flywheel 7. If the speed of rotation of the flywheel 7 is at a predetermined speed the CPU sends a signal to the speed control means 3 to prohibit any further increase in speed of the flywheel 7. If the CPU 20 determines that the speed of the flywheel 7 is below the predetermined speed the CPU sends a signal to the speed control means 3 which allows the speed of the flywheel 7 to increase if power is still being applied to the turbine 1.

The hollow flywheel 7 has an outer wall 8 extending around the outer circumference of the flywheel. An inner wall 9 is disposed radially inwards relative to the outer wall 8 such that it is set back at a distance from the outer wall 8 towards the centre of the flywheel 7. The space between the outer wall 8 and the inner wall 9 provides a cavity 11 which forms a receptacle for receiving fluid.

When the flywheel is at a predetermined speed fluid is introduced. In practice, any fluid suitable for increasing the mass of the flywheel could be used. However, in this specific example the fluid is described in terms of a liquid. The term liquid is used herein to describe for example water, both natural and salt water, and also any other suitable medium suitable for use with the present invention. For example water, miscible solvent or other solvent system which may not be miscible with water. In addition, the liquid may comprise one or more dissolved gases.

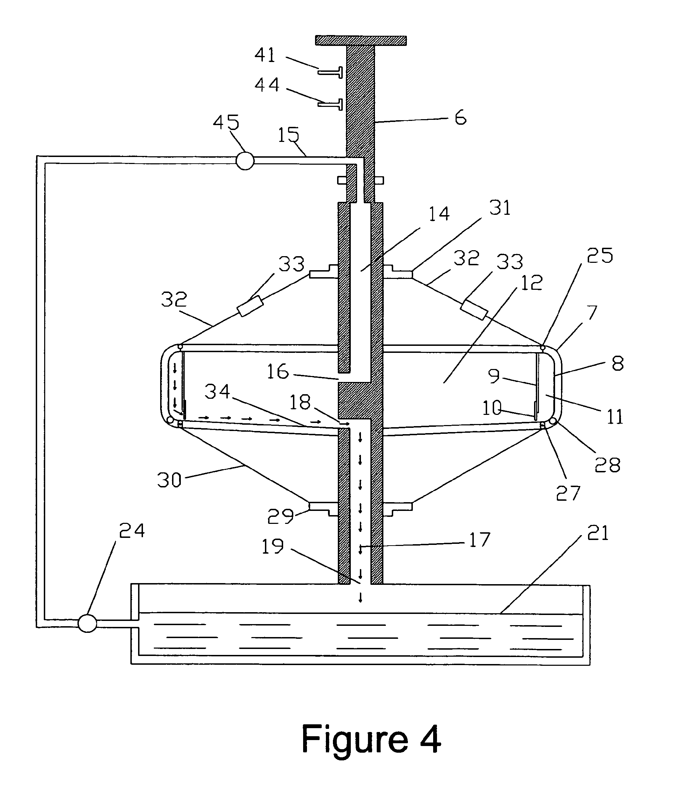

Referring also to Figure 4, the liquid is returned, from within the flywheel, to a holding reservoir or tank 21. As the rotational speed of the flywheel 7 is reduced, when the power is transferred to the generator 35, the CPU 20 determines the correct time to open a sealable inlet 10 to the cavity 11 holding the liquid 21a. This allows the liquid to escape from within the cavity 11 via the sealable inlet 10. As the liquid 21a falls due to the effect of gravity, the angle of the base 34, of the hollow flywheel 7, is such that the liquid naturally flows towards the centre of the flywheel 7. The main flywheel drive shaft 6, extending through the centre of the flywheel 7, has within it an outlet cavity 17 extending longitudinally therethrough. The cavity 17 has a drain opening 18 disposed substantially level with the base of the hollow flywheel 7. Liquid travels from the cavity 11 towards the drive shaft 6, at the centre of the hollow flywheel 7, enters the drain opening 18 into the cavity 17 and, under the influence of gravity, the liquid falls into the reservoir 21, below.

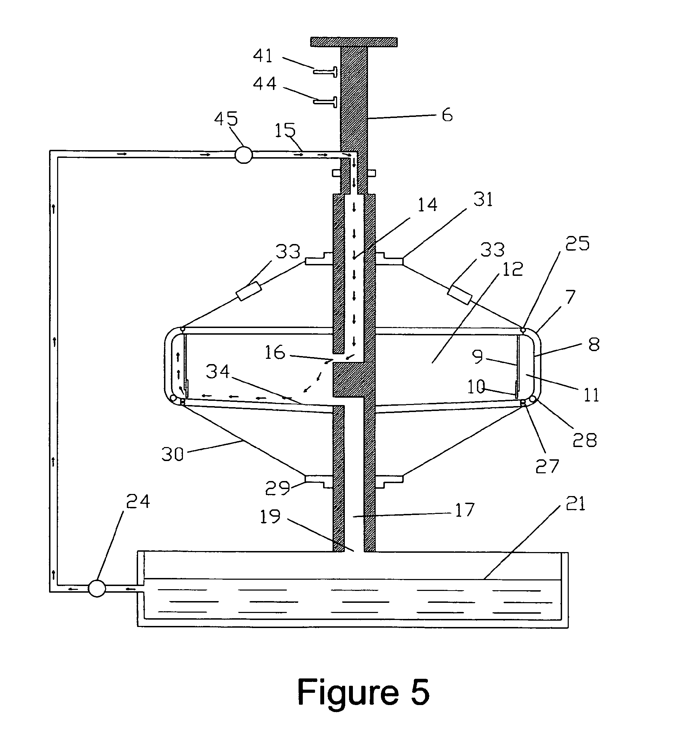

Figure 5 illustrates the flow of liquid introduced into the first embodiment of the flywheel, according to the present invention, from a holding reservoir upon monitoring the rotational speed of the flywheel at the predetermined speed. The liquid is introduced into the flywheel 7 through an inlet cavity 14, extending longitudinally within the drive shaft 6 above the outlet cavity 17 and on top of the flywheel 7.

When the flywheel reaches the predetermined speed, liquid from the reservoir 21, is fed into an inlet aperture 15, disposed in the inlet cavity 14. The liquid flows through the inlet cavity 14 and exits therefrom through an inlet aperture 16. The liquid then falls onto the base 34 of the hollow flywheel 7 under the influence of gravity. The centrifugal forces acting within the rotating flywheel 7 cause the liquid, which has entered the hollow flywheel 7, to be forced to the outer edges of the interior 12 of the flywheel. The sealable opening 10 allows the liquid to pass through into the cavity 11. The liquid is continually fed into the cavity 11 until the CPU 20 determines that the cavity 11 has reached a predetermined maximum capacity. A computer program within the CPU 20 determines when the cavity 11 has reached its predetermined maximum capacity by monitoring signals from strain gauges 33 and/or transducers 45.

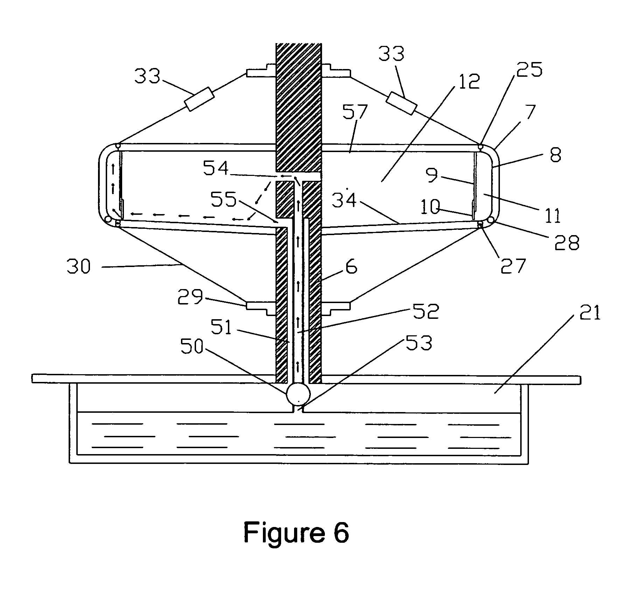

Figure 6 illustrates an alternative embodiment of a flywheel, according to the present invention, in which the liquid is both introduced into and drained from the flywheel from a portion of the drive shaft 6 extending below the level of the flywheel 7.

In this alternative embodiment, as the rotational speed of the flywheel 7 increases, liquid from reservoir tank 21 is fed into an inlet aperture 53 of an inlet cavity 52 which extend longitudinally within the drive shaft 6. The liquid flows through the inlet cavity 52 and exits into the hollow flywheel 7 through a second inlet aperture 54. The liquid then falls onto the base 34 of the hollow flywheel 7. The centrifugal forces acting within the rotating flywheel 7 cause the liquid to be forced to the outer edges of the interior of the flywheel 7. The sealable opening 10 allows the liquid present in the flywheel interior to pass into the flywheel cavity 11. In operation, liquid is continually fed into the flywheel cavity 11 until the computer program within the CPU 20 (shown in Figure 8) determines that the cavity 11 has been filled to a predetermined maximum.

Information that the cavity 11 has been filled to a predetermined maximum is passed to the CPU in the form of signals generated by means of strain gauges 33 and/or transducers 45, which enable the flow of liquid into the flywheel 7 to be monitored.

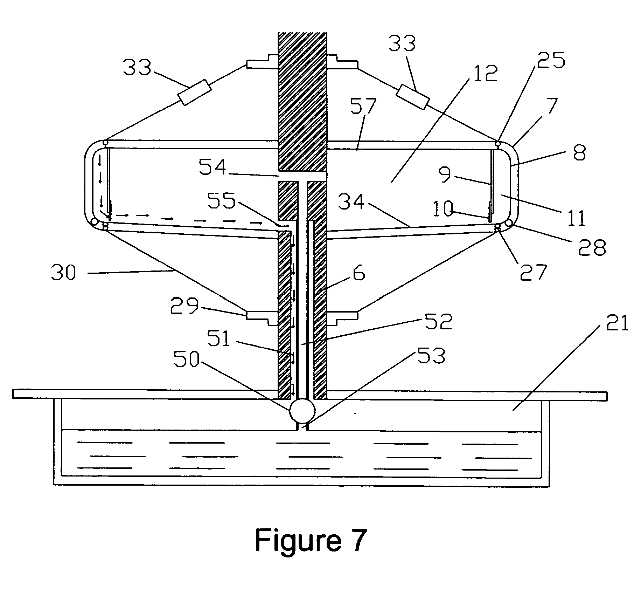

Figure 7 illustrates how the liquid flowing within the alternative embodiment of the flywheel described above, with reference to Figure 6, returns to a holding reservoir. More specifically, how liquid exits the flywheel through a shaft at the lower portion of the flywheel.

Once the power generated by the flywheel has be transferred to, for example, a generator 35, the rotational speed of the flywheel 7 is reduced. At the same time the CPU 20 determines that it is appropriate to open the sealable inlet 10, of cavity 11. Opening the sealable inlet 10 allows the liquid to drain from within the cavity 11. Due to the effects of gravity the liquid falls onto the base 34 of the hollow flywheel. The base 34 of the hollow flywheel comprises an angle that allows the liquid to flow naturally towards the drive shaft 6 at the centre of the flywheel 7.

The main drive shaft 6 has within it a cavity 51 with a drain opening 55 located towards the centre of the flywheel and level with the base of the hollow flywheel. Liquid travelling towards the centre of the hollow flywheel 7 is drawn towards and into the opening 55, of the cavity 51, and the liquid falls into the reservoir 21, under the influence of gravity.

Considering now in more detail the mode of operation of the sealable inlet 10 in Figures 1 to 7 and how this is used to contain liquid within the flywheel cavity 11. When the CPU 20 determines that a predetermined maximum amount of liquid is present within the cavity 11 of the flywheel 7, a sealable inlet means 10, for closing the opening in wall 9 is activated in order to prevent the liquid from draining out from within the cavity 11, towards the centre of the hollow flywheel 7. The CPU 20 also controls the timings for opening and closing the sealable inlet means 10, thereby sealing the opening in wall 9. The sealable inlet means may be, for example, but not limited to, a flange of for example rubber, to form a close seal between the wall of the cavity 9 and the base of the flywheel 34.

At the same time as the sealable inlet means is activated, a pump 24 (see Figure 5) is deactivated by the CPU 20, preventing any further liquid entering the hollow flywheel 7.

In Figures 1 to 7 there is also illustrated a further feature of the flywheel of the present invention, in the form of safety equipment. The safety equipment is fitted to the outer wall 8 of the flywheel 7, as follows. The outer wall 8, of the hollow flywheel 7, is fitted with a pivot 25. In a preferred embodiment of the present invention the pivot 25 is located at the top of the outer wall of the flywheel. In addition, a release mechanism 27 is located at the bottom of the outer wall of the flywheel. As an additional form of safety, releasable panel hatches 28 are further attached to the outer wall 8, of the hollow flywheel 7.

Also present in the flywheel apparatus of the present invention are transducers 41, for detecting excessive vibration in the event of structural or operational failure. The transducers 41 send signals to the CPU 20. Depending on the nature of the signals, the CPU determines either to reduce the speed of the flywheel equipment or, in severe situations, to activate the safety mechanism present in the flywheel, releasing the outer wall 8 and the panel hatches 28, thereby jettisoning the water held in the cavity 11 and nullifying the energy stored in the flywheel.

The safety equipment may operate by two alternative mechanisms. The outer wall 8, of the flywheel comprises a pivot means 25, for example a hinge, which enables the outer wall to pivot about the pivot means. However, the wall 8 of the flywheel is held in position by a locking device 27. When the locking device receives a signal from the CPU 20 the locking device 27, which acts as a means of releasing the pivotally mounted outer wall 8, is operated. That is, when a signal from the CPU 20 is supplied to the locking device 27, the wall 8 of the flywheel 7 is released and is able to pivot about for example hinge 25, creating a gap at the base of the outer wall 8, of the flywheel 7, and thereby allowing the release of all of the liquid held within the cavity 11, of the hollow flywheel 7.

The wall 8 of the flywheel 7 may further comprise one or more releasable panels 28, which are able to be rapidly released and thereby evacuate the liquid from the flywheel as follows. Under extreme circumstances, for example, when a structural defect occurs in the flywheel leading to potential lose of control of the flywheel the releasable panels 28 receive a signal from the CPU 20. The signal activates a release mechanism on the panels such that the releasable panels are rapidly expelled from the outer wall 8 of the flywheel. Under such circumstances, the releasable panels provide an instant evacuation method for all of the liquid within the hollow flywheel 7.

Both of these mechanisms reduce the volume of liquid in the flywheel and hence the mass of the flywheel 7, by expelling the liquid from within the cavity 11 and thereby reducing any danger posed to property or life due to an out of control flywheel.

It will be appreciated by one skilled in the art that additional transducers and signal providers may be employed as required to improve the operating efficiency and safety mechanism of the flywheel according to the present invention.

In Figure 8 there is illustrated a flow diagram of the communication system that exists between the component parts of the flywheel according to the first aspect of the present invention. More specifically, in Figure 8 there is illustrated how the CPU 20 may be used to transfer signals back and forth between the various component parts of the flywheel equipment within the overall system of the flywheel according to the present invention.

That is, the CPU 20 is provided to process the input signals from transducers located at various points around the flywheel apparatus of the present invention. A computer program within the central processing unit is used to determine the appropriate time at which output signals are provided to operate the various electrical components comprising the flywheel apparatus of the present invention.

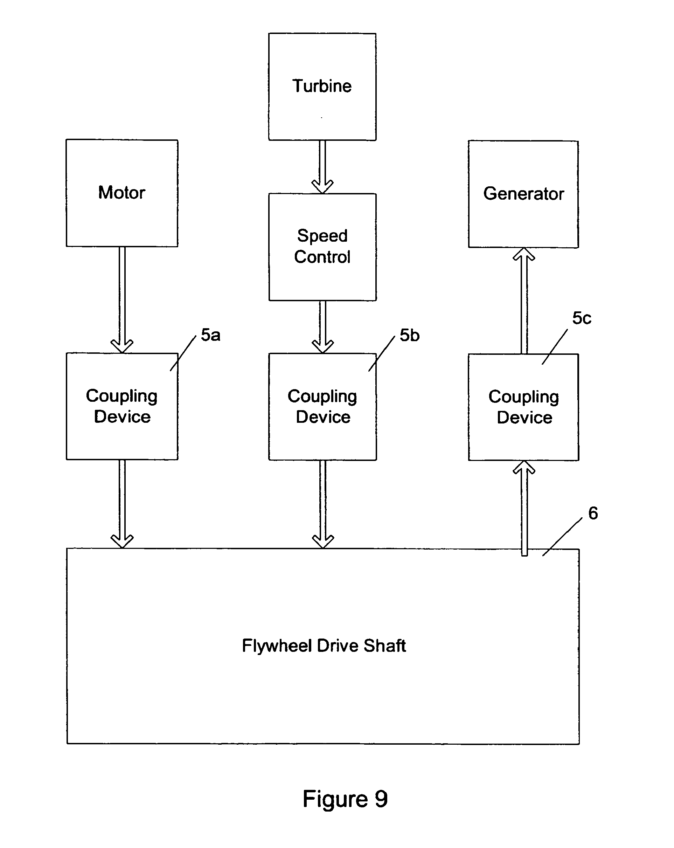

In Figure 9 there is illustrated various embodiments of the flywheel of the present invention in which the flywheel drive shaft is attached by coupling devices 5a, 5b, or 5c to for example a motor, a speed control unit and turbine and generator respectively.

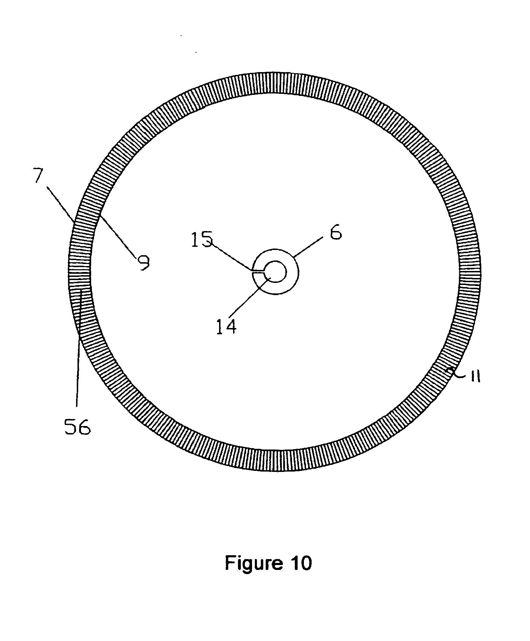

Figure 10 is a view from above the hollow flywheel 7 of the present invention illustrating baffles 56, located within the flywheel and fitted around the outer rim of the inner cavity 11. The purpose of the baffles 56 is to aid the movement of the liquid within the flywheel 7 as the flywheel 7 rotates. The baffles 56 extend from the base 34 to the top 57 of the cavity 11 within the flywheel 7. The number and size of the baffles 56 depends upon the size and speed of the flywheel 7. The baffles 56 may further comprise portals to allow liquid to flow from one side of a baffle to another and thereby enable liquid to flow around the inside cavity 11 of the flywheel 7.

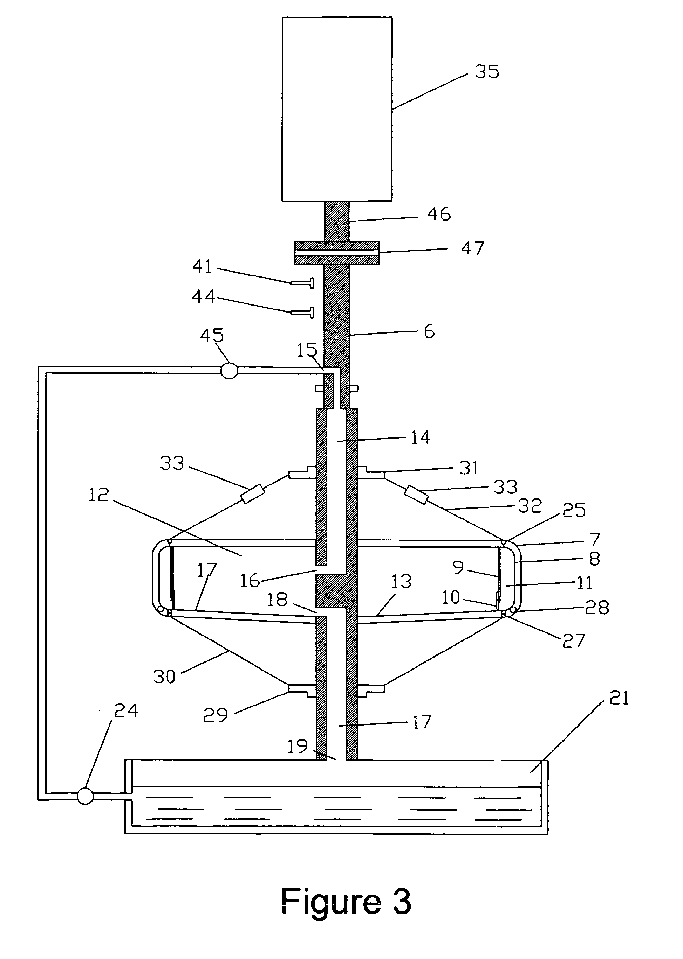

Referring again to Figure 3, power generated by the flywheel is transferred to for example a generator 35 as follows. The CPU 20 transmits an electrical signal to the coupling device 47. As a result, the coupling device 47 engages the output drive shaft 6 with the drive shaft 46, of the generator 35, thereby transferring power from the flywheel 7 to the generator 35.

When it is determined by the CPU 20 that power from the flywheel 7 is not to be transferred to the generator 35 the CPU sends a signal (or a lack of a signal) to the coupling device 47 which prevents the coupling device 47 engaging the drive shaft 6 with the drive shaft 46, thereby reducing frictional losses within the equipment.

The flywheel 7 of the present invention is most preferably constructed with a hollow interior 12. The flywheel 7 is preferably supported by top supporting means 32. The top supporting means 32 are preferably attached to a securing fixture 31. The securing fixture 31 is in turn preferably attached to the main drive shaft 6 of flywheel 7. The supporting means 32 provides the hollow flywheel 7 with additional strength during operation when centrifugal forces are applied to the flywheel 7 and when the cavity 11 is filled with liquid.

The supporting means 32 and securing fixture 31 are preferably connected to the top of the flywheel The supporting means 30 and securing fixture 29 are preferably attached to the bottom of the flywheel.

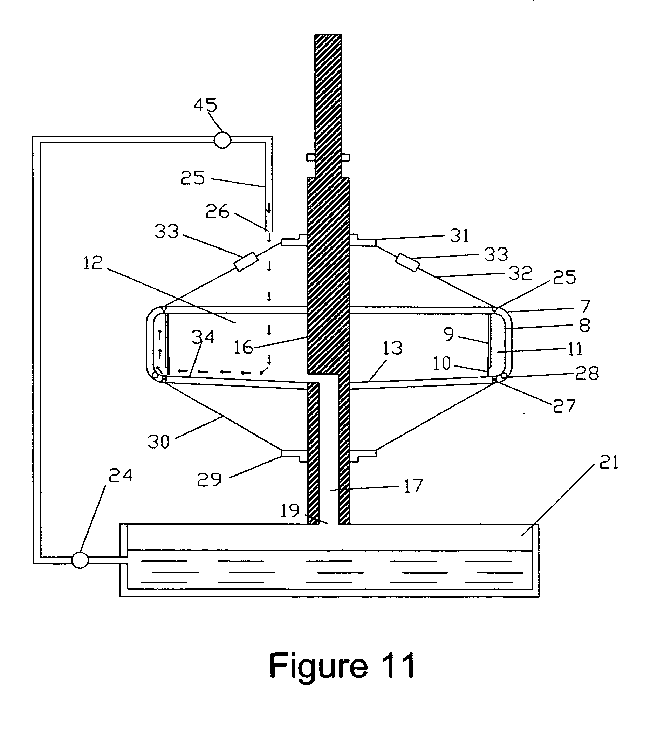

Figure 11 shows a further embodiment of a flywheel, according the present invention. More specifically, Figure 11 illustrates the flow of liquid into the flywheel via an opening in the top of the flywheel.

In operation, as the rotational speed of the flywheel 7 increases, liquid from the reservoir 21 is fed, for example, by pumping into the top of the hollow flywheel 7 via a conduit 25, through an outlet 26. The flow of liquid falls onto the base 34 of the hollow flywheel 7. The centrifugal forces acting within the rotating flywheel 7, cause the liquid, which has entered the hollow flywheel 7, to be forced to the outer edges of the interior 12 of the flywheel. The sealable opening 10 allows the liquid to pass through into the cavity 11. The liquid is continually fed into the cavity 11 until a computer program, associated with the CPU 20, determines by way of sensors or transducers that the liquid level in the cavity 11 has reached a predetermined maximum value. The signals are provided to the CPU by means of strain gauges 33 and transducers 45, which provide a means of measuring the flow of liquid into the flywheel 7.

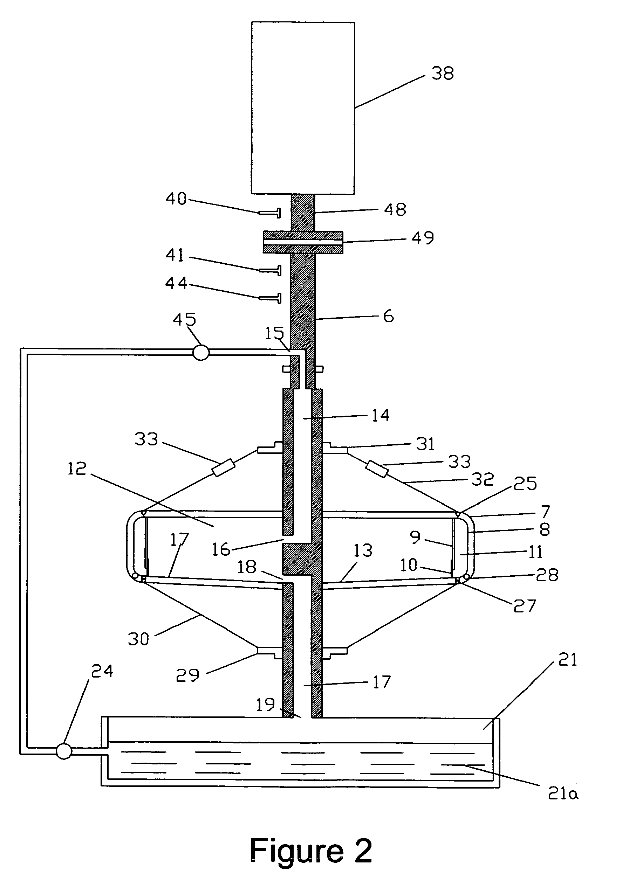

Referring again to Figure 2, in an alternative embodiment of the present invention, electrical power may be supplied to a motor 38, via an electrical circuit, to provide a means of speed control for the motor 38 thereby changing the characteristics of the electrical power supplied to the motor 38.

The motor 38 is connected to a drive shaft 48 and the drive shaft 48 is in turn connected to a coupling device 49. The coupling device 49 is connected to the flywheel 7.

The motor 38 and generator 35 (Figure 3) may have their windings within a single structure or housing or alternatively within separate housings.

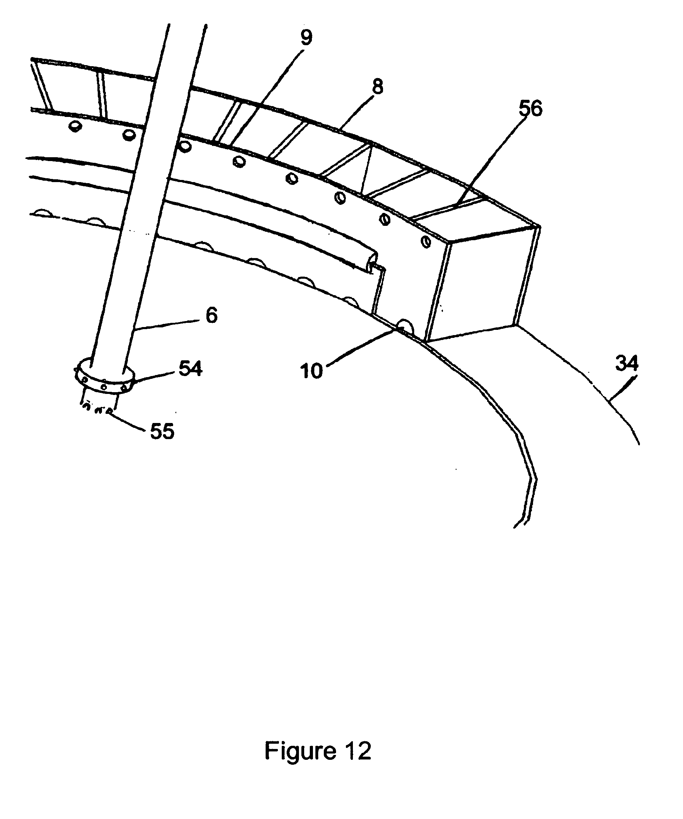

In Figure 12 there is illustrated an enlarged view of the liquid opening and flow mechanism of the around the cavity 11 of the flywheel 7. The baffles 56 extend between the inner wall 9 and outer wall 8 of the cavity 11. Associated with each baffle is a sealable opening 10 for allowing the liquid to selectively flow into and out of the cavity through the inner wall 9 or hold the liquid within the cavity 11. Also associated with each baffle 56 and disposed therein is an orifice 58 for allowing flow of the liquid past the baffles in a circumferential direction through the cavity 11.

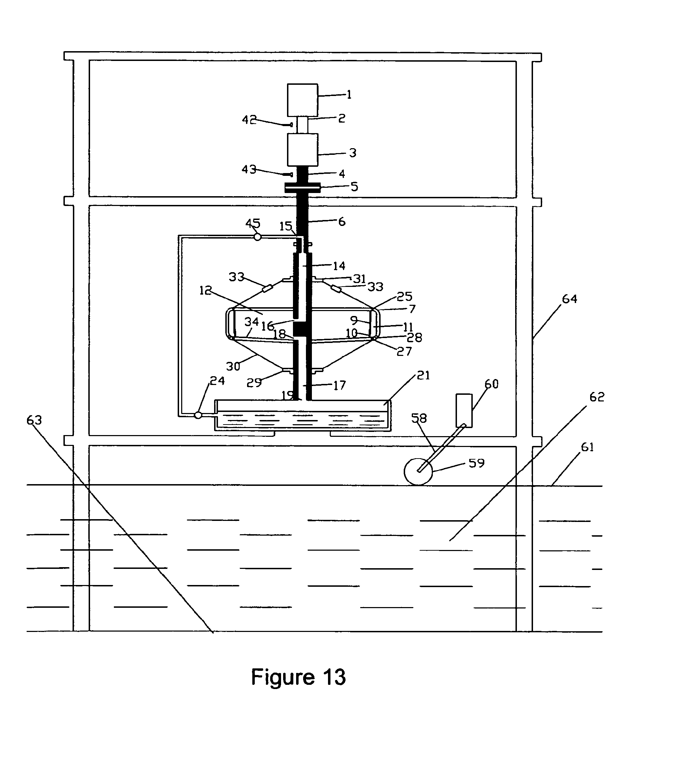

Referring to Figure 13, a flywheel, according to the present invention, is shown in use in a marine environment. A very large scale version of the flywheel may be used in a marine environment to store energy captured from wave or tidal power by means of pumps connected to the flywheel apparatus which floats on for example the surface of a water expanse such as sea, lake or ocean.

A pump 60 may be connected to a float 59 with the aid of an attachment arm 58. When the water level rises due to waves, or other movement of the water surface, the float 59 rises and in so doing moves the attachment arm 58. This in turn powers the pumping mechanism 60, which supplies a force to turbine 1. This force is then used to drive the flywheel 7, as previously described in relation to the embodiments of the present invention. The supporting structure 64 rests on the for example the seabed and is preferably attached to the seabed as a means of securing the flywheel. The supporting structure 64, serves to hold the flywheel 7, clear off the sea or ocean surface.

The pump 60, float 59, and connecting arm 58, may be applied in multiples to provide as much power as required by the turbine 1.

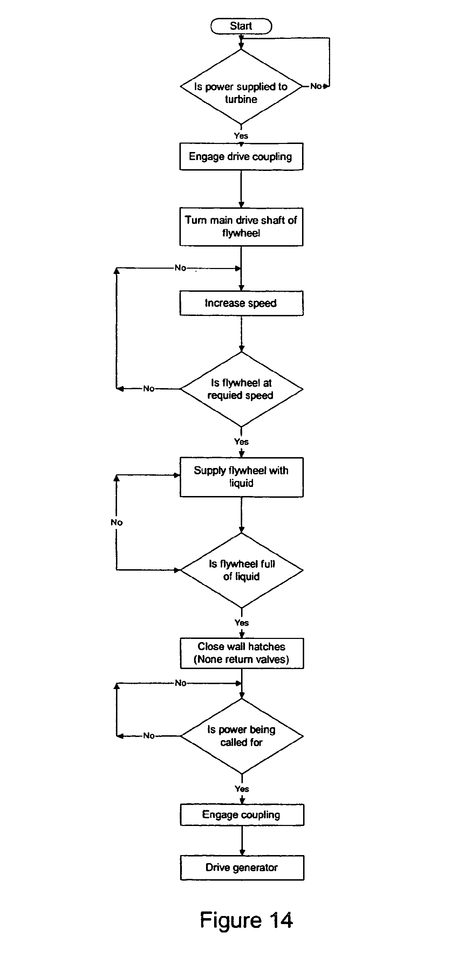

Figure 14 is a flow diagram showing a method of operating a flywheel according to the present invention.

In explaining the operation of the equipment it is assumed that operation of the flywheel commences from a stationary position and all of the liquid is held within the reservoir tank.

### 1. Power supply to turbine.

In operation, power is supplied to a turbine or motor. The power to the turbine may be in the form of wind, hydro, steam, or the shaft of the turbine may be turned using power from another mechanical source coupled to the drive shaft of the turbine.

The drive shaft, of the turbine, may be connected to the main shaft, of the flywheel, by means of a coupling device. The coupling device may be an electromagnetic clutch or another attachment means with the ability to disengage the turbine drive shaft, from the main drive shaft, of the flywheel, when required to do so by the central processing unit. The purpose of this is to reduce frictional losses within the system when no power is being supplied to the turbine.

The drive shaft of the turbine or motor may be connected directly to the drive shaft of the flywheel. In this situation no coupling device is required.

### 2. Engage drive coupling/turn main drive shaft of flywheel.

When external power is being supplied to the turbine or drive motor, the central processing unit, using signals from the transducers that are fitted throughout the apparatus, calculates the correct time to send a signal to the coupling device, this enables the drive shaft, of the turbine, to become engaged with the main drive shaft, of the flywheel. This in turn enables power being supplied to the turbine or motor, to be transferred to the flywheel, this causes the main drive shaft, and flywheel, to rotate.

### 3. Controlling and/or increasing the speed of flywheel using mechanical speed control (gearbox).

Transducers, are fitted to the drive shaft, of the flywheel, and signals from the transducers, are fed back to the central processing unit, which by means of a computer program calculates the speed of rotation, of the drive shaft. Using the results of this calculation together with the additional signals received from other transducer within the system, the central processing unit determines whether or not to increase or decrease the speed of the drive shaft through the operation of the speed control gear. The speed control gear has the capability to increase or decrease the speed of the output shaft in relation to the input shaft.

### Electronic speed control

In a situation where the power is supplied to the flywheel apparatus by means of a motor and not a turbine, the drive shaft of the flywheel may have the rotor of a motor physically connected to it and the current and or frequency of the supply may be altered to control the speed of rotation of the motor thereby controlling the speed of rotation of the flywheel. The motor may also be connected to a gearbox.

The rotational speed of the flywheel is calculated by means of a transducer sending a signal to the central processing unit. When it is determined by the central processing unit that the flywheel is at its predetermined maximum speed, liquid is then supplied to the hollow interior of the flywheel.

### 4. Supply of liquid to the flywheel.

The hollow flywheel has an outer wall and at a set distance from the outer wall towards the centre of the flywheel is a second or inner wall. The space between these two walls creates a cavity.

As the speed of the flywheel, increases, liquid from the reservoir tank, is fed into the interior of the hollow flywheel, this may be:
i) through a cavity in the main spindle at the top of the flywheel;
ii) through a cavity in the main spindle at the bottom of the flywheel or;
iii) alternatively, the liquid may be pumped from the reservoir through a conduit and into the top of an open flywheel.

As the liquid falls on the base of the rotating flywheel, the centrifugal forces acting within the flywheel cause the liquid to be transferred to the outer edges of the flywheel. The liquid then flows into the cavity through a sealable opening.

The liquid is fed into the flywheel for as long as the central processing unit determines that it should be. The central processing unit determines if the liquid should be fed into the flywheel based on the results of a computer program in the CPU, which relies upon signals from transducers fitted to the apparatus for the required calculations.

The rotational speed of the flywheel is constantly measured using transducers and the signals from these transducers are fed back to the central processing unit. The volume and flow of the liquid that is fed into the flywheel is also constantly measured and these measurements are also fed back to the central processing unit from the transducers.

Transducers are fitted to the flywheel apparatus to supply the central processing unit with signals to determine when the cavity has the required amount of liquid within it. The purpose of filling the flywheel with liquid is to increase the mass of the flywheel.

5. When it is determined by the central processing unit that a predetermined maximum amount of liquid is present within the cavity of the flywheel, then a means of sealing the opening is activated to prevent the liquid from flowing back out from within the cavity towards the centre of the hollow flywheel. The timing for opening and closing this sealing means is controlled by the central processing unit.

Also at this point a means of restricting any further liquid from entering the flywheel is activated.

Within the hollow flywheel, baffles are fitted around the outer edges of the inner cavity. The purpose of the baffles is to aid the movement of the fluid within the flywheel as the flywheel rotates. The baffles are fitted from the base to the top of the cavity within the flywheel. The number and size of the baffles depends upon the size and speed of the flywheel. The baffles may have holes in them to allow fluid to travel from one side of a baffle to the other side so that the fluid may travel all of the way around the inside wall of the flywheel but the baffles will restrict this flow.

6. When power is called for by the generator, and power is also being applied to the turbine, the central processing unit using the signals being supplied from the transducers then determines whether to activate the sealing means in the cavity to prevent any possible loss of fluid from the cavity walls. If the generator is calling for more power than is being supplied by the turbine the consequent loss of rotational speed will cause the centrifugal forces to be reduced thereby allowing fluid to drain from the cavity wall unless the sealing means is activated. A computer program within the central processing unit controls this procedure.

In the event that power is required:
Transducers are fitted to the generator control equipment to provide the central processing unit with signals to allow the central processing unit to determine if power is to be transferred to the generator from the flywheel.

If it is determined by the central processing unit that the power is to be transferred to the generator from the flywheel, when the shaft coupling equipment is activated by a signal from the central processing unit, this engages the output shaft from the flywheel to the input shaft of the generator thereby transferring power from the flywheel to the generator.

In the event that power is not required:
If it is determined by the central processing unit that the generator does not call for the power then the shaft coupling equipment is not engaged with generator shaft thereby reducing frictional losses.

The flywheel, is constructed to give a hollow interior, the flywheel, may be supported by supporting means, the supporting means, may be attached to a securing fixture, the securing fixture, will in turn be attached to the main drive shaft, of the flywheel. The purpose of the supporting means, is to give the hollow flywheel, enough strength to enable it to hold the structure of the flywheel together when the centrifugal forces are applied and the hollow interior of the flywheel, is supplied with liquid. Supporting means, and securing fixtures, are fitted to the top and bottom of flywheel.

### Patent Parts List

- 1.: Turbine
- 2.: Drive shaft of turbine
- 3.: Speed control mechanism
- 4.: Speed control mechanism output drive shaft
- 5.: Speed control mechanism output drive shaft coupling device
- 6.: Flywheel drive shaft
- 7.: Flywheel
- 8.: Flywheel wall
- 9.: Cavity wall
- 10.: Sealable opening
- 11.: Flywheel cavity
- 12.: Flywheel interior
- 13.: Base of hollow flywheel
- 14.: Flywheel drive shaft top cavity
- 15.: Flywheel drive shaft top cavity inlet
- 16.: Flywheel drive shaft top cavity outlet
- 17.: Flywheel drive shaft bottom cavity
- 18.: Flywheel drive shaft bottom cavity inlet
- 19.: Flywheel drive shaft bottom cavity outlet
- 20.: Central processing unit (CPU)
- 21.: Reservoir Tank
- 22.: Liquid supply pipe
- 23.: Liquid supply pipe outlet
- 24.: Pump
- 25.: Pivot means (hinge)
- 26.: Safety release panel
- 27.: Locking means for safety release panel
- 28.: Releasable panel
- 29.: Flywheel bottom support
- 30.: Flywheel bottom support cable
- 31.: Flywheel top support
- 32.: Flywheel top support cable
- 33.: Strain gauge
- 34.: Flywheel base
- 35.: Generator
- 36.: Generator coupling device
- 37.: Generator drive shaft
- 38.: Motor or motor and generator
- 39.: Electrical speed control
- 40.: Motor drive shaft speed detecting transducer
- 41.: Vibration detecting transducers
- 42.: Turbine speed detecting transducer
- 43.: Speed control output shaft speed detecting transducer
- 44.: Flywheel speed detecting transducer
- 45.: Means of measuring liquid flow
- 46.: Generator drive shaft
- 47.: Generator to drive shaft coupling device
- 48.: Motor drive shaft
- 49.: Motor drive shaft to flywheel drive shaft coupling device
- 50.: Pump
- 51.: Flywheel drive shaft bottom feed input cavity
- 52.: Flywheel drive shaft bottom feed outlet cavity
- 53.: Flywheel drive shaft bottom feed input pump
- 54.: Flywheel drive shaft bottom feed input cavity outlet
- 55.: Flywheel drive shaft bottom feed outlet cavity inlet
- 56.: Baffles
- 57.: Inside top of flywheel
- 58.: Baffle orifice

## Claims

1. A flywheel suitable for use with liquid wherein the flywheel comprises:
a receptacle for receiving the liquid; and wherein
the receptacle comprises an outer wall and an inner wall, the inner and outer wall forming a cavity for holding the liquid when the flywheel is in use wherein the outer wall of the cavity is pivotally connected to the flywheel.

2. A flywheel according to claim 1 wherein the cavity further comprises:
a sealing means for allowing the passage of liquid into the cavity when the flywheel is in operation and the free draining of the liquid from the cavity and the flywheel when the flywheel is not in use.

3. A flywheel according to claim 1 or 2 wherein the sealing means comprises a one-way valve.

4. A flywheel according to any of claims 1 to 3 wherein the flywheel receptacle is substantially circular.

5. A flywheel according to any of the preceding claims wherein in the cavity comprises one or more baffles.

6. A flywheel according to claim 5 wherein the, or each, baffle comprises an orifice.

7. A flywheel according to any of the preceding claims wherein the outer wall is securably connected to the flywheel.

8. A flywheel according to claim 7 wherein the securable connection comprises a release hatch.

9. A flywheel according to any of the preceding claims wherein the outer wall of the cavity further comprises one or more release panels.

10. A flywheel according to any of the preceding claims wherein liquid enters the flywheel by means of inlets disposed in the drive shaft.

11. A flywheel according to any of the preceding claims wherein the flywheel is connected to a turbine, motor or generator.

12. A flywheel according to claim 11 wherein the turbine is powered by steam, water or wind.

13. A flywheel according to any of the preceding claims further comprising a CPU operable to control the rate at which fluid is introduced into the receptacle relative to at least one of the energy being output from the flywheel, the mass and speed of rotation of the flywheel.

14. A flywheel according to any of the preceding claims wherein the flywheel is connected to a main drive shaft.

15. Use of a flywheel according to any of the preceding claims in a fresh water or marine environment for the storage of and transfer of energy from a wave source into electricity.

## Patentansprüche

1. Schwungrad, das zur Verwendung mit Flüssigkeit geeignet ist, wobei das Schwungrad umfasst:
ein Behältnis zum Aufnehmen der Flüssigkeit; und wobei
das Behältnis eine Außenwand und eine Innenwand umfasst, wobei die Innen- und
Außenwand einen Hohlraum zum Halten der Flüssigkeit bilden, wenn das Schwungrad im Gebrauch ist,
wobei die Außenwand des Hohlraums schwenkbar mit dem Schwungrad verbunden ist.

2. Schwungrad nach Anspruch 1, wobei der Hohlraum ferner umfasst:
eine Abdichtungseinrichtung zum Zulassen des Durchgangs von Flüssigkeit in den Hohlraum, wenn das Schwungrad in Betrieb ist, und das freie Ablaufen der Flüssigkeit aus dem Hohlraum und dem Schwungrad, wenn das Schwungrad nicht in Gebrauch ist.

3. Schwungrad nach Anspruch 1 oder 2, wobei die Abdichtungseinrichtung ein Einwegventil umfasst.

4. Schwungrad nach irgendeinem der Ansprüche 1 bis 3, wobei das Schwungradbehäitnis im Wesentlichen kreisförmig ist.

5. Schwungrad nach irgendeinem der vorhergehenden Ansprüche, wobei der Hohlraum ein oder mehrere Lenkbleche umfasst.

6. Schwungrad nach Anspruch 5, wobei das oder jedes Lenkblech eine Mündung umfasst.

7. Schwungrad nach irgendeinem der vorhergehenden Ansprüche, wobei die Außenwand sicher mit dem Schwungrad verbunden ist.

8. Schwungrad nach Anspruch 7, wobei die sicherbare Verbindung eine Freigabeluke umfasst.

9. Schwungrad nach irgendeinem der vorhergehenden Ansprüche, wobei die Außenwand des Hohlraums ferner eine oder mehrere Freigabebedienungsplatten umfasst.

10. Schwungrad nach irgendeinem der vorhergehenden Ansprüche, wobei Flüssigkeit mittels Einlässen, die in der Antriebswelle angeordnet sind, in das Schwungrad eintritt.

11. Schwungrad nach irgendeinem der vorhergehenden Anspruche, wobei das Schwungrad mit einer Turbine, einem Motor oder Generator verbunden ist.

12. Schwungrad nach Anspruch 11, wobei die Turbine durch Dampf, Wasser oder Wind angetrieben wird.

13. Schwungrad nach irgendeinem der vorhergehenden Ansprüche, ferner umfassend eine CPU, die dazu funktionsfähig ist, die Geschwindigkeit zu steuern, mit welcher Fluid in das Behältnis im Verhältnis zu der Energie, die vom Schwungrad ausgegeben wird, und/oder der Masse und/oder Rotationsgeschwindigkeit des Schwungrads eingeleitet wird.

14. Schwungrad nach irgendeinem der vorhergehenden Ansprüche, wobei das Schwungrad mit einer Hauptantriebswelle verbunden ist.

15. Verwendung des Schwungrads nach irgendeinem der vorhergehenden Ansprüche in einer Frischwasser- oder Meeresumgebung für die Speicherung und Übertragung von Energie von einer Wellenquelle in Elektrizität.

## Revendications

1. Volant utilisable avec un liquide, le volant comprenant : un réceptacle pour recevoir le liquide ; et
le réceptacle comprenant une paroi externe et une paroi interne, la paroi interne et la paroi externe formant une cavité pour confenir le liquide lorsque le volant est utilisé, et la paroi externe de la cavité étant raccordé en rotation au volant.

2. Volant selon la revendication 1, dans lequel la cavité comprend en outre : un moyen d'étanchéité pour permettre le passage de liquide dans la cavité lorsque le volant est en fonctionnement et la purge libre du liquide de la cavité et du volant lorsque le volant n'est pas utilisé.

3. Volant selon la revendication 1 ou 2, dans lequel le moyen d'étanchéité comprend une soupape unidirectionnelle.

4. Volant selon l'une quelconque des revendications 1 à 3, dans lequel le réceptacle du volant est essentiellement circulaire.

5. Volant selon l'une quelconque des revendications précédentes, dans lequel la cavité comprend un ou plusieurs déflecteurs.

6. Volant selon la revendication 5, dans lequel le déflecteur ou chacun des déflecteurs comprend un orifice.

7. Volant selon l'une quelconque des revendications précédentes, dans lequel la paroi externe est raccordée par fixation au volant.

8. Volant selon la revendication 7, dans lequel le raccordement par fixation comprend une trappe de retenue.

9. Volant selon l'une quelconque des revendications précédentes, dans lequel la paroi externe de la cavité comprend en outre un ou plusieurs panneaux de retenue.

10. Volant selon l'une quelconque des revendications précédentes, le liquide entrant dans le volant par des entrées aménagées dans l'arbre de transmission.

11. Volant selon l'une quelconque des revendications précédentes, le volant étant raccordé à une turbine, un moteur ou une génératrice.

12. Volant selon la revendication 11, dans lequel la turbine est alimentée par de la vapeur, de l'eau ou du vent.

13. Volant selon l'une quelconque des revendications précédentes, le volant comprenant en outre une unité centrale de traitement servant à contrôler le débit d'introduction du liquide dans le réceptacle par rapport à au moins une grandeur d'énergie fournie par le volant, la masse et la vitesse de rotation du volant.

14. Volant selon l'une quelconque des revendications précédentes, le volant étant raccordé à un arbre de transmission principal.

15. Utilisation d'un volant selon l'une quelconque des revendications précédentes dans de l'eau douce ou dans un milieu marin pour le stockage et le transfert d'énergie à partir d'une source d'onde en électricité.
